# EUROPEAN PATENT SPECIFICATION

(11) **EP 0 460 148 B1**
(45) Date of publication and mention of the grant of the patent: **21.09.1994**
(21) Application number: 91900287.3
(22) Date of filing: 10.12.1990
(51) Int. Cl.: B60G 21/055

(54) **STABILISER BARS**
STABILISATORSTANGE
BARRES STABILISATRICES

(30) Priority: 22.12.1989 GB 8929056
(43) Date of publication of application: 11.12.1991
(73) Proprietor: THE TEMPERED SPRING COMPANY LIMITED, Sheffield, Yorkshire S4 7WS (GB)
(72) Inventor: FISHER, Ian, Albert, Chesterfield S42 7JQ (GB); FERDANI, Philip, Dunchurch Rugby Warwickshire CV22 6QD (GB)
(74) Representative: Crux, John Anthony T&N plc, Group Patent Department
(86) International application number: GB9001921
(87) International publication number: WO9109748

(56) References cited:
- EP-A- 0 384 799
- FR-A- 2 342 425
- FR-A- 2 564 043
- US-A- 2 275 637
- Caouthoucs & Plastigues, vol 65, no. 678, May 1988, (Paris, FR), "Les élastomères thermoplastiques", pages 39-42 and 45-47

## Description

This invention relates to stabiliser bars, commonly termed anti-roll bars. Such bars are used in automotive suspension systems; they are produced by hot or cold forming steel rod which is thereafter shot peened and painted. In use, the bar is secured adjacent each end so that relative displacement results in the bar being put into torsion. It is usual for the bar to extend through and be supported by metallic and non-metallic hardware, the latter including for example rubber bushes, and/or non-metallic axial travel limiting means associated with the suspension system.

It is known to support such stabilizer bars by way of non-metallic component which are formed prior to assembling them with the bar, either before or during installation of the bar into a suspension system, or even to mould a rubber component directly onto the bar during its manufacture. EP-A1-0384799 has a priority date of 20.02.89 and a publication date of 29.08.90 and thus belongs to the state of the art according to Article 54(3) EPC. This document discloses integrally moulding a simple rubber component onto such a bar and indifferent results achieved and, in preference thereto, bonding a more sophisticated component to the bar with adhesive.

This invention is particularly concerned with the provision of a stabilizer bar having suspension components integrally moulded thereto and in accordance with a first aspect of the invention as defined in claim 1 a method of making a stabilizer bar comprises the steps of forming the bar from steel rod and then integrally moulding onto the bar at each of two spaced apart locations substantially simultaneously a suspension component of rubber or plastics.

The provision of such spaced components substantially simultaneously not only permits their provision in an economically short manufacturing operation time but also permits their disposition with respect to each other to be fixed with as great an accuracy as any correspondingly spaced parts of the suspension system with which they have to assemble.

Moulding may be by compression, transfer or injection, using tooling adapted to support the bar relative to a mould cavity having the configuration of the desired suspension component. In order to mould two spaced non-metallic suspension components simultaneously, two separate but synchronised moulding machines in tandem may be used rather than a single much larger machine provided with two moulding stations. To enhance the adhesion between the non-metallic suspension component and the bar by increasing the area of interface therebetween, the component may include at least one axially extending portion integral with the component. This applies in particular to non-metallic axial travel-limiting washers, or thrust collars, which require radial rather than axial extent to co-operate with other suspension elements; it will not normally be needed for a conventionally-shaped rubber bush.

Although stabiliser bars according to the invention have the non-metallic suspension components moulded in situ on the bar, it may still be necessary to fabricate the associated metallic suspension components for locating and mounting purposes. However, assembly and installation will normally be simplified as the need to locate both the bar and components with respect to each other and the suspension system is reduced to simply locating the components with respect to the suspension system with the bar automatically following into place. The normal shot peened surface finish may provide a good enough "key" to the rubber or plastics material, and the bonding achieved may be satisfactory for most applications, since non-metallic suspension components have only a limited structural function. For example rubber bushes are normally supported/enclosed by metal clamping brackets in the suspension system. Axial travel limiting washers or collars serve only to control axial movement at the extremes of steering position and to minimize squeaking caused by displacement through the bushes. Furthermore, by using a standard non-metallic suspension component size, it may be possible to use a common pattern of non-metallic suspension component for stabiliser bars of different sizes, by changing only the sizes of the metallic components, thereby simplifying suspension design/assembly. Bonding to the bar can be enhanced by degreasing the bar prior to moulding.

Particularly preferred compositions include thermoplastic resins that may be substantially rigid at ambient temperatures, elastomeric compositions, either conventional rubbers or thermoplastics, and thermoset compositions. Epoxy compounds are particularly preferred thermoset compositions for the purposes of the invention. Suitable thermoplastics include PBT and PPS materials. Conventional rubber compositions compounded for compression or injection moulding may be used. The choice of material is not critical, provided that it withstands any normal painting/stoving treatments which may be subsequently applied to the finished bar. For most purposes, it will be preferable to apply such treatments prior to moulding.

Each suspension component may be moulded from a composition containing reinforcing fillers such as fibres and/or particulate fillers together with such bonding agents, flow promoters and the like as are commonly used.

In accordance with another aspect of the present invention there is provided a stabiliser bar as defined in claims 8 to 12.

In order that the invention be better understood preferred embodiments of it will now be described by way of example with reference to the following Examples.

### Example 1A

An epoxy resin moulding compound was injection moulded directly onto a shot peened stabiliser bar to form an annular washer. The bar was pre-treated with a commercial de-greasing agent and moulding was carried out with the moulding tool and bar heated to 180°C, the barrel temperature of the machine at the injection nozzle being 80°C. The latter temperature was selected to achieve satisfactory flow of the epoxy compound which subsequently cured in situ on the bar.

The washer produced had good resistance to lateral thrust and was useful as a travel-limiting component in conjunction with a conventional rubber bush.

### Example 1B

A glass fibre reinforced, mineral filled poly-phenylene sulphide composition was injection moulded onto a shot peened, de-greased, painted stabiliser bar, using the following machine conditions:-

| | |
|---|---|
| Barrel temperature profile | 300°C, 300°C, 280°C, 260°C |
| Tool temperature | 80°C |
| Injection pressure | 110 MPa (16000 psi) |
| Injection time | 15 seconds |
| Cooling time | 10 seconds |
| Holding pressure (cooling) | 48 MPa (7000 psi) |

The products were moulded collars which were tested for lateral loading strength as follows:

| Collar Size (mm) | | Bar Diameter (mm) | Load (KN) |
|---|---|---|---|
| OD | Width | | |
| 22 | 5 | 14 | 1.5 |
| 22 | 5 | 16 | 1.4 |
| 30 | 5 | 18 | 2.6 |

In each case the load was that developed prior to lateral slippage.

### Example 1C

A polybutylene terepthalate composition was injection moulded onto shot peened and already-painted stabiliser bars, under the following conditions:-

| | |
|---|---|
| Barrel temperature profile | 260°C, 260°C, 240°C, 220°C |
| Mould temperature | 40°C |
| Injection pressure | 117 MPa (17000 psi) |
| Injection time | 15 seconds |
| Cooling time | 15 seconds |
| Holding pressure (cooling) | 48 MPa (7000 psi) |

For comparison purposes, both shot peened unpainted and shot peened painted bars were used and tested for lateral loading strength, as before.

| Collar Size (mm) | | Bar Diameter (mm) | State | Load (KN) |
|---|---|---|---|---|
| OD | Width | | | |
| 25 | 5 | 15 | unpainted | 0.99 |
| 25 | 5 | 15 | painted | 0.94 |

### Example 2

In this case, the material of example 1B was used to produce a collar with an integral, axially extending annular flange. The moulding conditions were as in example 1B, but with a clamping pressure of 69 MPa (10000 psi).

This configuration of collar was adopted to show that despite using bars of different diameters, a common collar size would give satisfactory results, thereby enabling its use with a single, split suspension bush size.

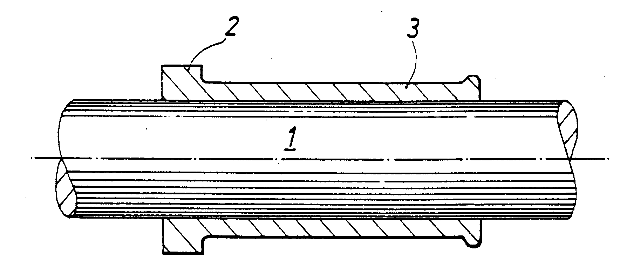

This particular embodiment is further illustrated by the accompanying drawing in which the sole Figure is a cross-sectional side view through part of a stabiliser bar onto which has been moulded a collar which incorporates an integral, axially-extending annular flange. In the Figure, the stabiliser bar 1 is cylindrical; its surface was shot peened and painted prior to injection moulding the collar 2 which its axially-extending cylindrical flange 3. The same collar/flange was moulded onto bars of different diameter and the lateral loading strength was determined, with the following results:-

| Bar Diameter (mm) | Load (KN) |
|---|---|
| 12 | 2.9 |
| 14 | 1.8 |
| 16 | 1.6 |

These results were satisfactory.

### Example 3

A rubber bush was injection moulded in situ on a stabiliser bar using a natural rubber composition consisting of:-

| | |
|---|---|
| natural rubber | 100 parts by weight |
| carbon black | 30 parts by weight |
| curing agents | 2.75 parts by weight |
| anti-oxidants, processing aids | 14 parts by weight |

This was plasticised at 80°C and injected into a tool heated to 170°C where it was allowed to cure for three minutes. The moulding produced was sufficiently well bonded to the bar and had sufficient mechanical stiffness to perform satisfactorily as a suspension bush.

### Example 4

A suspension bush was injection moulded in situ on a stabiliser bar from a thermoplastic elastomer composition of the kind sold under the trade mark SANTOPRENE, grade 101-80, described as a dynamically vulcanised polypropylene/EPDM. Moulding was carried out onto a previously shot peened and painted bar, using a barrel temperature of 180°C with a cold moulding tool. The injection pressure was 83 MPa (12000 psi) and the holding pressure (cooling) was 41.5 MPa (6000 psi). The total cycle time was 30 seconds, comprising 10 seconds for injection and 20 seconds for cooling.

The thus-moulded bush performed satisfactorily as a suspension bush.

## Claims

1. A method of making a stabiliser bar comprising the steps of forming the bar from steel rod and then integrally moulding onto the bar at each of two spaced apart locations substantially simultaneously a suspension component of rubber or plastics.

2. A method as claimed in claim 1 characterised by disposing said two spaced apart bar locations in relation to two synchronised moulding machines operating in tandem and integrally moulding said components simultaneously.

3. A method as claimed in claim 1 or claim 2 characterised by moulding each said component by injection moulding.

4. A method according to any one of claims 1 to 3 characterised by moulding each said component from a thermoplastic resin material.

5. A method according to claim 4 characterised by moulding each said component from polyphenylene sulphide or polybutylene terephthalate.

6. A method according to any one of claims 1 to 4 characterising by moulding each said component from a thermoplastic elastomer.

7. A method according to any one of claims 1 to 6 characterised by moulding the components with a composition containing reinforcing fillers such as fibres and/or a particulate filler.

8. A stabiliser bar comprising a steel rod having at each of two spaced apart locations a suspension component of rubber or plastics integrally moulded onto the bar by the method of any one of claims 1 to 7.

9. A stabiliser bar comprising a steel rod having at each of two spaced apart locations a non-metallic suspension component including a thermoplastic resin integrally moulded onto the bar.

10. A stabiliser bar according to claim 9 characterised in that the thermoplastic resin is polyphenylene sulphide or polybutylene terephthalate.

11. A stabiliser bar according to claim 9 or claim 10 characterised in that the component includes a reinforcing fibrous or particulate filler.

12. A stabiliser bar according to any one of claims 8 to 11 characterised in that each component comprises an annular thrust collar (2) having a radial width greater than its axial thickness and an axially extending flange portion (3), of less radial width than said annular thrust collar (2), operable to provide a cylindrical suspension bush mounting surface on the bar (1).

## Patentansprüche

1. Verfahren zur Herstellung einer Stabilsatorstange, dadurch gekennzeichnet, daß man die Stange aus einem Stahlstab formt und dann integral auf die Stange an jedem von zwei im Abstand befindlichen Stellen praktisch gleichzeitig eine Aufhängungskomponente aus Kautschuk und Kunststoff aufformt.

2. Verfahren nach Anspruch 1, dadurch gekennzeichnet, daß man diese zwei im Abstand befindlichen Stellen an der Stange in Beziehung zu zwei synchronisierten Formmaschinen bringt, die in Tandemanordnung arbeiten und diese Komponenten gleichzeitig integral aufformen.

3. Verfahren nach Anspruch 1 oder 2, dadurch gekennzeichnet, daß man jede Komponente durch Spritzgießen formt.

4. Verfahren nach irgendeinem der Ansprüche 1 bis 3, dadurch gekennzeichnet, daß man jede Komponente aus einem thermoplastischen Harzmaterial formt.

5. Verfahren nach Anspruch 4, dadurch gekennzeichnet, daß man jede Komponente aus Polyphenylensulfid oder Polybutylenterepthaltat formt.

6. Verfahren nach irgendeinem der Ansprüche 1 bis 4, dadurch gekennzeichnet, daß man jede Komponente aus einem thermoplastischen Elastomeren formt.

7. Verfahren nach irgendeinem der Ansprüche 1 bis 6, dadurch gekennzeichnet, daß man die Komponenten aus einer Zusammensetzung formt, die verstärkende Füllstoffe, wie Fasern und/oder einen teilchenförmigen Füllstoff enthält.

8. Stabilisatorstange, enthaltend einen Stahlstab, der an jedem von zwei im Abstand befindlichen Stellen eine Aufhängungskomponente aus Kautschuk oder Kunststoff integral auf die Stange nach dem Verfahren von irgendeinem der Ansprüche von 1 bis 7 aufgeformt enthält.

9. Stabilisatorstange, dadurch gekennzeichnet, daß ein Stahlstab an jedem von zwei im Abstand angeordneten Stellen eine nichtmetallische Aufhängungskomponente aufweist, die ein thermoplastisches Harz integral auf die Stange aufgeformt umfaßt.

10. Stabilsatorstange nach Anspruch 9, dadurch gekennzeichnet, daß das thermoplastische Harz Polyphenylensulfid oder Polybutylenterepthalat ist.

11. Stabilsatorstange nach Anspruch 9 oder 10, dadurch gekennzeichnet, daß die Komponente einen verstärkenden faserigen oder teilchenförmigen Füllstoff aufweist.

12. Stabilisatorstange nach irgendeinem der Ansprüche 8 bis 11, dadurch gekennzeichnet, daß jede Komponente einen ringförmigen Druckring (2) aufweist, der eine radiale Breite hat, die größer ist als seine axiale Dicke und einem axial sich erstreckenden Flanschteil (3) von geringerer radialer Breite als dieser ringförmige Druckring (2), der zur Bereitstellung der Befestigungsoberfläche einer zylindrischen Aufhängungsbuchse auf der Stange (1) wirkt.

## Revendications

1. Procédé de fabrication d'une barre stabilisatrice comprenant les phases consistant à former la barre à partir d'acier en barre puis à mouler d'un seul tenant sur la barre à chacun de deux emplacements espacés sensiblement simultanément une pièce de suspension de caoutchouc ou de plastique.

2. Procédé selon la revendication 1, caractérisé par la disposition desdits deux emplacements de barre espacés relativement à deux machines de moulage synchronisées fonctionnant en tandem et par le moulage d'un seul tenant desdites pièces simultanément.

3. Procédé selon la revendication 1 ou 2, caractérisé par le moulage de chacune desdites pièces par moulage par injection.

4. Procédé selon l'une quelconque des revendications 1 à 3, caractérisé par le moulage de chacune desdites pièces à partir d'une résine thermoplastique.

5. Procédé selon la revendication 4, caractérisé par le moulage de chacune desdites pièces à partir de sulfure de polyphénylène ou de polytéréphtalate de butylène.

6. Procédé selon l'une quelconque des revendications 1 à 4, caractérisé par le moulage de chacune desdites pièces à partir d'un élastomère thermoplastique.

7. Procédé selon l'une quelconque des revendications 1 à 6, caractérisé par le moulage des pièces avec une composition contenant des charges de renfort telles que des fibres et/ou une charge particulaire.

8. Barre stabilisatrice comprenant une barre d'acier comportant à chacun de deux emplacements espacés une pièce de suspension en caoutchouc ou plastique moulée d'un seul tenant sur la barre par le procédé selon l'une quelconque des revendications 1 à 7.

9. Barre stabilisatrice comprenant une barre d'acier comportant à chacun de deux emplacements espacés une pièce de suspension non métallique comprenant une résine thermoplastique moulée d'un seul tenant sur la barre.

10. Barre stabilisatrice selon la revendication 9, caractérisée en ce que la résine thermoplastique est du sulfure de polyphénylène ou du polytéréphtalate de butylène.

11. Barre stabilisatrice selon la revendication 9 ou 10, caractérisée en ce que la pièce comprend une charge de fibres de renfort ou une charge particulaire.

12. Barre stabilisatrice selon l'une quelconque des revendications 8 à 11, caractérisée en ce que chaque pièce comprend un collier de poussée annulaire (2) ayant une largeur radiale supérieure à son épaisseur axiale et un rebord s'étendant axialement (3) d'une largeur radiale inférieure à celle dudit collier de poussée annulaire (2), pouvant servir de surface de montage de douille de suspension cylindrique sur la barre (1).
